# EUROPÄISCHE PATENTANMELDUNG

(11) **EP 1 491 381 A2**
(43) Veröffentlichungstag der Anmeldung: **29.12.2004**
(21) Anmeldenummer: 04102399.5
(22) Anmeldetag: 28.05.2004
(51) Int. Cl.: B60K 15/035

(54) **Entlüftungseinrichtung für Kraftstoffbehälter**

(30) Priorität: 27.06.2003 DE 10329121
(71) Anmelder: SIEMENS AKTIENGESELLSCHAFT, 80333 München (DE)
(72) Erfinder: Reiter, Frank, 42781 Haan (DE); Schönert, Oliver, 44147 Dortmund (DE)

(57) **Zusammenfassung**

Bei einer Entlüftungseinrichtung für einen Kraftstoffbehälter (1) weist eine Entlüftungsleitung (5) einen beweglichen Abschnitt (6) und ein Federelement (14) auf. Das freie Ende der Entlüftungsleitung (5) wird gegen eine obere Wandung des Kraftstoffbehälters (1) vorgespannt. Hierdurch wird sichergestellt, dass ein an dem freien Ende der Entlüftungsleitung (5) angeordnetes Ventil (7) jederzeit nahe der oberen Wandung des Kraftstoffbehälters (1) angeordnet ist.

## Beschreibung

Die Erfindung betrifft eine Entlüftungseinrichtung für einen Kraftstoffbehälter mit einer in dem Kraftstoffbehälter angeordneten, bis zu der oberen Wandung geführten Entlüftungsleitung.

Solche Entlüftungseinrichtungen werden in heutigen Kraftstoffbehältern häufig eingesetzt und sind aus der Praxis bekannt. Die Entlüftungsleitung ist häufig an einem Ausperlbehälter der Entlüftungseinrichtung angeschlossen. Insbesondere bei aus Schalenteilen gefertigten Kraftstoffbehältern wird der Ausperlbehälter zusammen mit anderen Bauteilen meist auf dem unteren der Schalenteile montiert. Anschließend werden die Schalenteile des Kraftstoffbehälters miteinander verbunden.

Die Entlüftungsleitung benötigt hierbei einen Sicherheitsabstand von der oberen Wandung, damit die Schalenteile des Kraftstoffbehälters zuverlässig miteinander verbunden werden können. Der Sicherheitsabstand muss die Toleranzen ausgleichen, die durch die Fertigung der Entlüftungseinrichtung und der Schalenteile sowie der Montage der Entlüftungsleitung entstehen. Zudem kann die Wandung des Kraftstoffbehälters nach der Befüllung mit Kraftstoff quellen oder sich durchbiegen, wodurch der Abstand zwischen der Entlüftungsleitung und der oberen Wandung des Kraftstoffbehälters ebenfalls schwankt. Ein zu großer Abstand der Entlüftungsleitung von der oberen Wandung des Kraftstoffbehälters führt jedoch dazu, dass der Kraftstoffbehälter im gefüllten Zustand nicht entlüftet werden kann.

Der Erfindung liegt das Problem zugrunde, eine Entlüftungseinrichtung der eingangs genannten Art so weiterzubilden, dass der Kraftstoffbehälter auch bei großen Toleranzen zuverlässig entlüftet wird.

Dieses Problem wird erfindungsgemäß dadurch gelöst, dass die Entlüftungsleitung einen beweglichen Abschnitt hat und dass das freie Ende der Entlüftungsleitung von der oberen Wandung des Kraftstoffbehälters in seiner Lage gehalten ist.

Durch diese Gestaltung lässt sich die erfindungsgemäße Entlüftungseinrichtung mit der Entlüftungsleitung auf einem der Schalenteile montieren. Beim Aufsetzen des zweiten Schalenteils wird das freie Ende der Entlüftungsleitung in eine Lage bewegt, in der die Verbindung der Schalenteile nicht behindert wird. Hierdurch kann die erfindungsgemäße Entlüftungseinrichtung höher sein, als der Kraftstoffbehälter. Deshalb ist kein Sicherheitsabstand zwischen der Entlüftungsleitung und der oberen Wandung des Kraftstoffbehälters erforderlich. Die Entlüftungsleitung ist daher auch bei Toleranzen der Entlüftungsleitung und des Kraftstoffbehälters im oberen Bereich des Kraftstoffbehälters angeordnet. Hierdurch lässt sich auch ein mit Kraftstoff gefüllter Kraftstoffbehälter zuverlässig entlüften.

Die erfindungsgemäße Entlüftungsvorrichtung lässt sich gleichermaßen in einteiligen Kraftstoffbehältern einsetzten.

Der bewegliche Abschnitt könnte beispielsweise plastisch verformbar sein. Ebenfalls könnte das freie Ende der Entlüftungsleitung beispielsweise an der oberen Wandung des Kraftstoffbehälters befestigt werden. Dies erfordert jedoch einen hohen Montageaufwand. Das freie Ende der Entlüftungsleitung liegt jedoch gemäß einer vorteilhaften Weiterbildung der Erfindung auch bei einem Durchbiegen des Bodens des Kraftstoffbehälters zuverlässig an der oberen Wandung an und lässt sich einfach montieren, wenn das Ende der Entlüftungsleitung elastisch gegen die obere Wandung des Kraftstoffbehälters vorgespannt ist.

Ein Einschwappen von Kraftstoff in die erfindungsgemäße Entlüftungseinrichtung lässt sich einfach vermeiden, wenn die Entlüftungsleitung an ihrem freien Ende ein Ventil aufweist.

Die Entlüftungsleitung wird gemäß einer anderen vorteilhaften Weiterbildung der Erfindung zuverlässig in ihrer vorgesehenen Lage gehalten, wenn das freie Ende der Entlüftungsleitung an einem Abstützteil angeordnet ist.

Die erfindungsgemäße Entlüftungseinrichtung gestaltet sich konstruktiv besonders einfach, wenn der bewegliche Abschnitt ineinander verschiebbare Teleskoprohre hat.

Zur Verringerung von Fertigungskosten der Entlüftungsleitung trägt es gemäß einer anderen vorteilhaften Weiterbildung der Erfindung bei, wenn der bewegliche Abschnitt biegsam gestaltet ist und schräg auf die obere Wandung des Kraftstoffbehälters zuläuft. Hierbei kann der bewegliche Abschnitt beispielsweise als Wellrohr gestaltet sein.

Der bewegliche Abschnitt lässt sich gemäß einer anderen vorteilhaften Weiterbildung der Erfindung mit besonders geringem baulichen Aufwand zuverlässig abdichten, wenn er einen Faltenbalg oder einen Wellschlauch hat.

Die elastische Vorspannung des freien Endes der Entlüftungsleitung gegen die obere Wandung des Kraftstoffbehälters erfordert einen besonders geringen Aufwand, wenn die Entlüftungsleitung ein Federelement aufweist.

Insbesondere bei dem schräg gegen die obere Wandung des Kraftstoffbehälters zulaufenden Abschnitt lässt sich das freie Ende der Entlüftungsleitung besonders einfach gegen die obere Wandung vorspannen, wenn das Federelement als Schenkelfeder oder Blattfeder ausgebildet ist.

Eine senkrechte Abstützung des freien Endes der Entlüftungsleitung an der oberen Wandung des Kraftstoffbehälters erfordert einen besonders geringen baulichen Aufwand, wenn das Federelement als die Teleskoprohre oder den Faltenbalg vorspannende Wendelfeder ausgebildet ist.

Die Montage des beweglichen Abschnitts der Entlüftungsleitung gestaltet sich gemäß einer anderen vorteilhaften Weiterbildung der Erfindung besonders einfach, wenn eines der Teleskoprohre eine langgestreckte Ausnehmung und das andere der Teleskoprohre einen in die Ausnehmung eindringenden und im Verhältnis zu dieser kurzen Rasthaken hat.

Die Steuerung des Ventils erfordert gemäß einer anderen vorteilhaften Weiterbildung der Erfindung einen besonders geringen Aufwand, wenn das Ventil einen Schwimmer aufweist.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: eine schematische Schnittdarstellung eines Kraftstoffbehälters mit einer erfindungsgemäßen Entlüftungseinrichtung,
- Figur 2: eine vergrößerte Schnittdarstellung einer Entlüftungsleitung aus Figur 1,
- Figur 3: eine weitere Ausführungsform der Entlüftungsleitung aus Figur 1 in einer vergrößerten Schnittdarstellung.

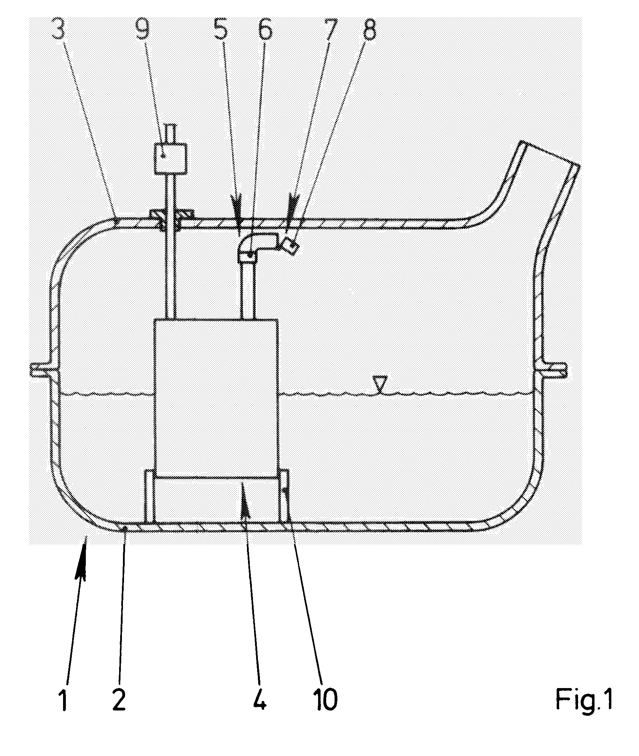

Figur 1 zeigt einen Kraftstoffbehälter 1 mit zwei Schalenteilen 2, 3. Weiterhin zeigt Figur 1 eine Entlüftungseinrichtung 4 mit einer in den oberen Bereich des Kraftstoffbehälters 1 geführten Entlüftungsleitung 5. Das freie Ende der Entlüftungsleitung 5 weist einen beweglichen Abschnitt 6 auf und stützt sich an der oberen Wandung des Kraftstoffbehälters 1 ab. Das freie Ende der Entlüftungsleitung 5 haltert zudem ein Ventil 7 mit einem schwenkbar gelagerten Schwimmer 8. Hierdurch wird verhindert, dass Kraftstoff in die Entlüftungseinrichtung 4 einschwappen kann. Eine weitere Leitung ist mit einem außerhalb des Kraftstoffbehälters 1 angeordneten Aktivkohlefilter 9 verbunden. Das untere der Schalenteile 2 haltert eine Aufnahme 10 für die Entlüftungseinrichtung 4. Zur Montage wird die Entlüftungseinrichtung 4 in der Aufnahme 10 montiert und danach das obere der Schalenteile 3 auf das untere Schalenteil 2 gesetzt und an den Rändern mit diesem dichtend verbunden.

Innerhalb der Entlüftungseinrichtung 4 kann beispielsweise ein Kondensator angeordnet sein, in dem über die Entlüftungsleitung 5 einströmende Gase gekühlt werden, so dass die darin enthaltenen Kohlenwasserstoffe auskondensieren. Die auskondensierten Kohlenwasserstoffe werden dem Kraftstoffbehälter 1 zugeführt. Der übrige Teil der Gase gelangt über den Aktivkohlefilter 9 in die Umwelt. Weiterhin dient die Entlüftungseinrichtung 4 dazu, bei einem Verbrauch von Kraftstoff Luft aus der Umgebung in den Kraftstoffbehälter 1 einströmen zu lassen. Selbstverständlich kann die Entlüftungseinrichtung 4 mehr als die eine dargestellte Entlüftungsleitung 5 und die zu dem Aktivkohlefilter 9 führende Leitung für eine Betankung des Kraftstoffbehälters 1 und für dessen Betrieb aufweisen.

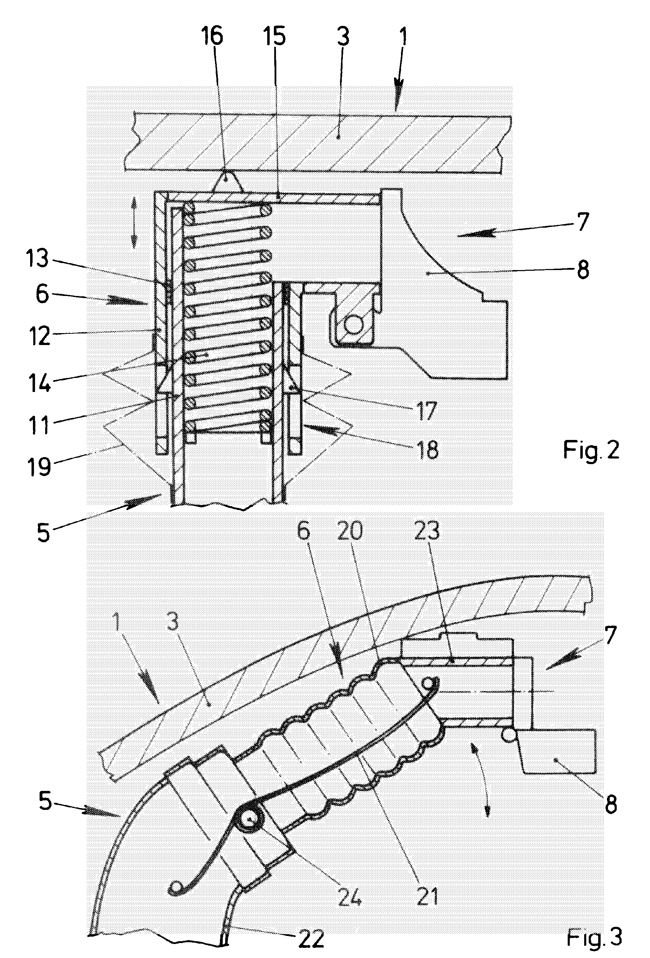

Figur 2 zeigt das freie Ende der Entlüftungsleitung 5 aus Figur 1 in einer stark vergrößerten Schnittdarstellung. Der bewegliche Abschnitt der Entlüftungsleitung 5 hat zwei Teleskoprohre 11, 12. Die Teleskoprohre 11, 12 sind über eine Lamellendichtung 13 gegeneinander abgedichtet und mittels eines Federelementes 14 vorgespannt. Das innere der Teleskoprohre 11 ist mit der in Figur 1 dargestellten Entlüftungseinrichtung 4 fest verbunden, während das äußere der Teleskoprohre 12 mit dem Ventil 7 verbunden ist. Das Ventil 7 hat ein Gehäuseteil 15 mit einem an der oberen Wandung des Kraftstoffbehälters 1 anliegenden Abstützteil 16. Die Beweglichkeit des Ventils 7 gegenüber dem inneren Teleskoprohr 11 ist zur Verdeutlichtung in der Zeichnung mit einem Pfeil gegenzeichnet. Bei einer Durchbiegung des in Figur 1 dargestellten unteren Schalenteils 2 des Kraftstoffbehälters 1 gleicht das Federelement 14 in der eingezeichneten Pfeilrichtung die Bewegung aus, so dass das Abstützteil 16 stets an der oberen Wandung des Kraftstoffbehälters 1 anliegt. Die Verbindung der Teleskoprohre 11, 12 untereinander weist einen an dem inneren Teleskoprohr 11 angeordneten Rasthaken 17 auf. Der Rasthaken 17 dringt in eine längliche Ausnehmung 18 des äußeren Teleskoprohres 12 ein.

In einer alternativen Ausführungsform sind die Teleskoprohre 11, 12 anstelle der Lammellendichtung 13 mittels eines in der Zeichnung strichpunktiert dargestellten Faltenbalgs 19 abgedichtet.

Figur 3 zeigt eine weitere Ausführungsform des freien Endes der Entlüftungsleitung 5 aus Figur 1. Hierbei ist zu erkennen, dass der bewegliche Abschnitt 6 einen biegsamen Wellschlauch 20 aufweist. Ein als Schenkelfeder ausgebildetes Federelement 21 stützt sich an einem mit der in Figur 1 dargestellten Entlüftungseinrichtung 4 fest verbundenen Rohrstück 22 ab und spannt ein Gehäuse 23 des Ventils 7 gegen die obere Wandung des Kraftstoffbehälters 1 vor. Das Ventil 7 ist daher in der dargestellten Pfeilrichtung schwenkbar um einen Haltebolzen 24 des Federelementes 21 gehalten.

## Patentansprüche

1. Entlüftungseinrichtung für einen Kraftstoffbehälter mit einer in dem Kraftstoffbehälter angeordneten, bis zu der oberen Wandung geführten Entlüftungsleitung, **dadurch gekennzeichnet , dass** die Entlüftungsleitung (5) einen beweglichen Abschnitt (6) hat und das freie Ende der Entlüftungsleitung (5) von der oberen Wandung des Kraftstoffbehälters (1) in seiner Lage gehalten ist.

2. Entlüftungseinrichtung nach Anspruch 1, **dadurch gekennzeichnet , dass** das Ende der Entlüftungsleitung (5) elastisch gegen die obere Wandung des Kraftstoffbehälters (1) vorgespannt ist.

3. Entlüftungseinrichtung nach Anspruch 1 oder 2, **dadurch gekennzeichnet, dass** die Entlüftungsleitung (5) an ihrem freien Ende ein Ventil (7) aufweist.

4. Entlüftungseinrichtung nach zumindest einem der vorhergehenden Ansprüche, **dadurch gekennzeichnet , dass** das freie Ende der Entlüftungsleitung (5) an einem Abstützteil (16) angeordnet ist.

5. Entlüftungseinrichtung nach zumindest einem der vorhergehenden Ansprüche, **dadurch gekennzeichnet , dass** der bewegliche Abschnitt (6) ineinander verschiebbare Teleskoprohre (11, 12) hat.

6. Entlüftungseinrichtung nach zumindest einem der vorhergehenden Ansprüche, **dadurch gekennzeichnet , dass** der bewegliche Abschnitt (6) biegsam gestaltet ist und schräg auf die obere Wandung des Kraftstoffbehälters (1) zuläuft.

7. Entlüftungseinrichtung nach zumindest einem der vorhergehenden Ansprüche, **dadurch gekennzeichnet , dass** der bewegliche Abschnitt (6) einen Faltenbalg (19) oder einen Wellschlauch (20) hat.

8. Entlüftungseinrichtung nach zumindest einem der vorhergehenden Ansprüche, **dadurch gekennzeichnet , dass** die Entlüftungsleitung (5) ein Federelement (14, 21) aufweist.

9. Entlüftungseinrichtung nach zumindest einem der vorhergehenden Ansprüche, **dadurch gekennzeichnet , dass** das Federelement (21) als Schenkelfeder oder Blattfeder ausgebildet ist.

10. Entlüftungseinrichtung nach zumindest einem der vorhergehenden Ansprüche, **dadurch gekennzeichnet , dass** das Federelement (14) als die Teleskoprohre (11, 12) oder den Faltenbalg (19) vorspannende Wendelfeder ausgebildet ist.

11. Entlüftungseinrichtung nach zumindest einem der vorhergehenden Ansprüche, **dadurch gekennzeichnet , dass** eines der Teleskoprohre (12) eine langgestreckte Ausnehmung (18) und das andere der Teleskoprohre (11) einen in die Ausnehmung (18) eindringenden und im Verhältnis zu dieser kurzen Rasthaken (17) hat.

12. Entlüftungseinrichtung nach zumindest einem der vorhergehenden Ansprüche, **dadurch gekennzeichnet , dass** das Ventil (7) einen Schwimmer (8) aufweist.
